# EUROPÄISCHE PATENTSCHRIFT

(11) **EP 0 849 486 B1**
(45) Veröffentlichungstag und Bekanntmachung des Hinweises auf die Patenterteilung: **17.04.2002**
(21) Anmeldenummer: 97121038.0
(22) Anmeldetag: 01.12.1997
(51) Int. Cl.: F16D 65/12

(54) **Verfahren zum Wechsel der Bremsscheibe einer Scheibenbremse sowie zugehörige Scheibenbremse**
Process for the change of the brake disc of a disc brake and associated disc brake
Procédé de changement du disque de frein d'un frein à disque ainsi que son frein à disque

(30) Priorität: 18.12.1996 DE 19652694
(43) Veröffentlichungstag der Anmeldung: 24.06.1998
(73) Patentinhaber: BPW Bergische Achsen Kommanditgesellschaft, 51674 Wiehl (DE)
(72) Erfinder: Ebbinghaus, Wilfried, 51674 Wiehl (DE)
(74) Vertreter: Stenger, Watzke & Ring Patentanwälte

(56) Entgegenhaltungen:
- EP-A- 0 703 130
- DE-A- 2 610 811
- DE-A- 4 230 012
- DE-A- 4 338 593

## Beschreibung

Die Erfindung betrifft ein Verfahren zum Wechsel der Bremsscheibe einer Scheibenbremse, insbesondere von Nutzfahrzeugen, deren Bremsscheibe aus einem Reibring und einer Bremsscheibennabe besteht, über die die Bremsscheibe an einer auf einem Achsschenkel drehbar gelagerten Radnabe befestigt ist, die einen Radflansch zur lösbaren Befestigung eines Rades aufweist, wobei die Bremsscheibe im Bereich ihres Reibringes mit zwei Bremsbelägen zusammenwirkt, die mit ihren Bremsbelagträgern in einem Schacht eines Bremssattelträgers angeordnet sind, der an einem Befestigungsflansch eines Achskörpers befestigt ist und die Betätigungseinrichtung der Scheibenbremse trägt. Weiterhin betrifft die Erfindung ein zugehöriges Achsmodul.

Bei den bekannten Scheibenbremsen (beispielsweise aus DE 42 30 012 A) ist die Bremsscheibennabe der Bremsscheibe in Richtung auf den Radflansch der Nabe verlängert und mit einem radial abstehenden Befestigungsflansch ausgebildet, über den die Bremsscheibe entweder mittels der Radbolzen oder mittels separater Befestigungsbolzen mit dem Radflansch der Radnabe lösbar verbunden wird. Hierdurch ergibt sich der Nachteil, daß für einen Wechsel der Bremsbeläge das Rad (oder bei Zwillingsbereifung die Räder) demontiert werden muß, um Zugang zu den Bremsbelägen zu erhalten. Außer diesen aufwendigen Arbeiten beim Belagwechsel besitzt die bekannte Konstruktion den Nachteil, daß die topfförmige Ausbildung der Bremsscheibennabe mit anschließendem Befestigungsflansch zu einer großen Materialansammlung auf der einen Seite der Bremsscheibe führt, die bei der Erwärmung der Bremsscheibe beim Bremsen eine einseitige thermische Verformung der Bremsscheibe zur Folge hat, die sich schirmartig darstellt.

Da nicht nur die Bremsbeläge, sondern auch die Bremsscheiben verschleißen, müssen regelmäßig auch die Bremsscheiben gewechselt werden. Für einen derartigen Bremsscheibenwechsel sind nach Entfernen der Bremsbeläge in der voranstehend beschriebenen Art außerdem die Radbolzen bzw. die Befestigungsbolzen zu entfernen und sämtliche Schrauben zu lösen, die den Bremssattelträger am Befestigungsflansch des Achskörpers halten, so daß der Bremssattelträger mit der kompletten Bremse abgenommen oder um eine gelöste Schraube weggeschwenkt werden kann. Während die Radbolzen bzw. Befestigungsbolzen verhältnismäßig einfach zu entfernen sind, ergeben sich Schwierigkeiten beim Lösen bzw. Entfernen der den Bremssattelträger am Befestigungsflansch des Achskörpers haltenden Schrauben, da diese wegen der ständigen Hitzeeinwirkung regelmäßig festsitzen. Bei Bremsscheibentemperaturen bis 900°C ergeben sich Temperaturen an den Befestigungsschrauben bis 500°C.

Der Erfindung liegt die **Aufgabe** zugrunde, neben einer Vereinfachung des Wechselns der Bremsbeläge einen Wechsel der Bremsscheibe ohne Demontage des Bremssattelträgers zu ermöglichen.

Die **Lösung** dieser Aufgabenstellung durch das erfindungsgemäße Verfahren ist dadurch gekennzeichnet, daß die Radnabe unter Trennung von der Bremsscheibennabe der in ihrer Position festgehaltenen Bremsscheibe vom Achsschenkel abgezogen wird, daß danach die Bremsbelagträger mit den Bremsbelägen aus dem Schacht des Bremssattelträgers entfernt werden und daß anschließend die Positionierung der Bremsscheibe aufgehoben, die Bremsscheibe in Richtung auf den Achsschenkel abgesenkt und die dem Bremssattelträger gegenüberliegende Hälfte der Bremsscheibe in Richtung auf das freie Ende des Achsschenkels verschwenkt und schließlich die Bremsscheibe aus dem Bremssattelträger entnommen und über den Achsschenkel entfernt wird.

Mit der Erfindung wird die Möglichkeit geschaffen, nicht nur die Bremsbeläge auf einfache Weise auswechseln zu können, weil die Radnabe unter Trennung von der Bremsscheibennabe der in ihrer Position festgehaltenen Bremsscheibe vom Achsschenkel abgezogen werden kann, sondern auch die Bremsscheibe nach dem Entfernen der Bremsbeläge aus dem Schacht des Bremssattelträgers auf einfache Weise auszuwechseln, indem nach Aufhebung der Positionierung der Bremsscheibe diese in Richtung auf den Achsschenkel abgesenkt und die dem Bremssattelträger gegenüberliegende Hälfte der Bremsscheibe in Richtung auf das freie Ende des Achsschenkels verschwenkt wird, so daß schließlich die Bremsscheibe aus dem Bremssattelträger entnommen und über den Achsschenkel entfernt werden kann. Hierdurch wird ein Lösen der den Bremssattelträger am Befestigungsflansch des Achskörpers haltenden Schrauben und ein Demontieren bzw. Verschwenken des Bremssattelträgers entbehrlich, womit sich die Arbeiten für einen Bremsscheibenwechsel erheblich vereinfachen.

Gemäß einem weiteren Merkmal der Erfindung kann die Radnabe zusammen mit dem am Radflansch montierten Rad vom Achsschenkel abgezogen werden.

Ein zur Durchführung des erfindungsgemäßen Verfahrens geeignetes Achsmodul ist erfindungsgemäß dadurch gekennzeichnet, daß die Abmessungen einerseits der Höhe und der axialen Dicke des Reibringes der Bremsscheibe und andererseits des radialen Abstandes zwischen dem Achsschenkel und dem dem Radflansch benachbarten vorderen Teil des Bremssattelträgers sowie des axialen Abstandes zwischen vorderem und hinterem Teil des Bremssattelträgers aufeinander abgestimmt sind.

Bei einem Bremssattelträger, der zwei Flansche zur Befestigung am Befestigungsflansch des Achskörpers und einen vorderen sowie einen hinteren Verbindungssteg zwischen diesen Flanschen aufweist, die den Schacht für die Bremsbelagträger bilden, ist gemäß einem weiteren Merkmal der Erfindung der hintere Verbindungssteg in seinem mittleren Bereich in axialer, von der Bremsscheibe weg weisender Richtung versetzt ausgebildet. Dieser Versatz kann bogenförmig sein oder durch einen Rücksprung erfolgen. Außerdem kann der vordere Verbindungssteg schmäler, aber höher als der hintere Verbindungssteg ausgebildet sein, um das Entfernen der Bremsscheibe aus dem Bremssattelträger zu ermöglichen.

Bei einer bevorzugten Ausführung der Erfindung ist der radiale Abstand des vorderen Verbindungssteges des Bremssattelträgers vom Achsschenkel größer als der des hinteren Verbindungssteges.

Gemäß einem weiteren Merkmal der Erfindung kann der Reibring der Bremsscheibe zumindest in einem Teilbereich seines Umfanges an mindestens einer Reibfläche mit Ausnehmungen bzw. Vertiefungen versehen sein, um die Montage bzw. Demontage der Bremsscheibe durch Schaffung von zusätzlichem Freigang zu erleichtern.

Um nach einer Positionierung der Bremsscheibe die Radnabe, vorzugsweise zusammen mit dem an ihr befestigten Rad vom Achsschenkel abziehen zu können, ist die Bremsscheibennabe über axial verlaufende Vorsprünge und/oder Vertiefungen mit dem Radnabenhals verdrehfest verbunden. Hierdurch entfällt die bisherige einseitige, in einem radial abstehenden Befestigungsflansch endende Verlängerung der Bremsscheibennabe, die eine einseitige Materialanhäufung und damit eine einseitige thermische Belastung der Bremsscheibe ergab.

Um die notwendigen Flächen für die Übertragung des Bremsmomentes von der Bremsscheibe auf die Radnabe zu schaffen, kann die Bremsscheibennabe in Richtung auf den Radflansch der Radnabe mit einer axialen Verlängerung versehen sein.

Auf der Zeichnung ist ein Ausführungsbeispiel der erfindungsgemäßen Scheibenbremse dargestellt, mit dessen Hilfe nachfolgend das erfindungsgemäße Verfahren zum Wechsel der Bremsscheibe erläutert werden wird. Auf der Zeichnung zeigt:
- Fig. 1: einen Längsschnitt durch die obere Hälfte einer Scheibenbremse im Betriebszustand,
- Fig. 2: einen der Fig. 1 entsprechenden Längsschnitt, nachdem die Radnabe vom Achsschenkel abgezogen worden ist,
- Fig. 3: einen weiteren, den Fig. 1 und 2 entsprechenden Längsschnitt nach Entfernen der Bremsbeläge,
- Fig. 4: einen weiteren Längsschnitt nach Aufheben der Positionierung der Bremsscheibe und Absenken der Bremsscheibe auf den Achsschenkel,
- Fig. 5: einen den vorangegangenen Darstellungen entsprechenden Längsschnitt mit nach vorn verschwenkter und aus dem Bremssattelträger herausbewegter Bremsscheibe,
- Fig. 6: eine Vorderansicht gemäß dem Pfeil VI in Fig. 2,
- Fig. 7: eine Draufsicht gemäß dem Pfeil VII in Fig. 6,
- Fig. 8: eine perspektivische Ansicht des Bremssattelträgers und
- Fig. 9: eine in der oberen Hälfte geschnittene Seitenansicht einer Bremsscheibe.

Die Darstellungen eines Ausführungsbeispieles einer Scheibenbremse zeigen einen Teil eines Achskörper 1, an dessen Enden jeweils ein Achsschenkel 2 ausgebildet ist. Dieser Achsschenkel 2 ist mit zwei Lagersitzen 2a und 2b für den Innenring von vorzugsweise als Kegelrollenlagern ausgebildeten Wälzlagern ausgebildet, die der besseren Übersichtlichkeit wegen auf der Zeichnung nicht dargestellt sind. Mittels dieser Wälzlager wird eine Radnabe 3 auf dem Achsschenkel 2 drehbar gelagert, die ihrerseits mit Lagersitzen 3a und 3b für den Außenring des jeweiligen Wälzlagers ausgebildet ist. Weiterhin weist die Radnabe 3 einen Radflansch 3c zur lösbaren Befestigung eines auf der Zeichnung nicht dargestellten Rades mittels Radbolzen auf; die für diese Radbolzen im Radflansch 3c vorgesehenen Bohrungen 3d sind in den Zeichnungen zu erkennen.

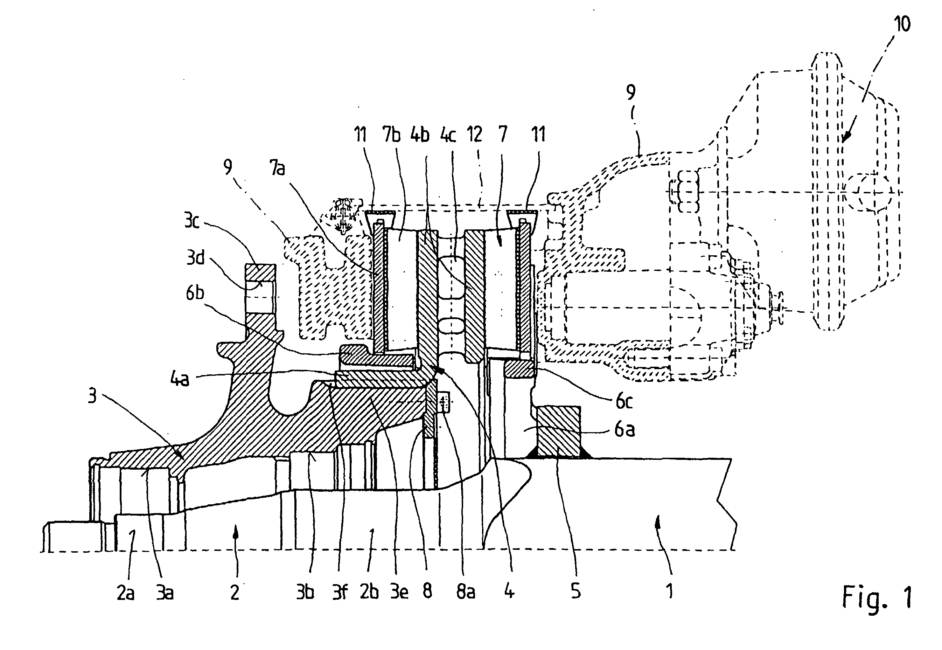

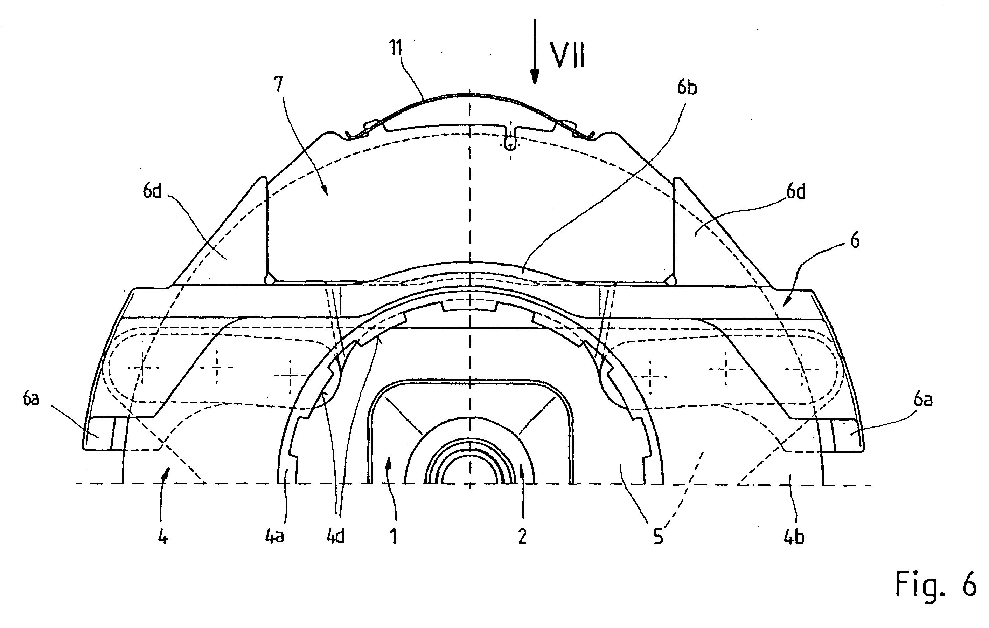

An dem sich zum Achskörper 1 hin erstreckenden Radnabenhals 3e sind axial verlaufende Vertiefungen 3f ausgebildet, über die eine Bremsscheibe 4 unverdrehbar, jedoch in axialer Richtung trennbar mit der Radnabe 3 verbunden ist. Diese Bremsscheibe 4 umfaßt ihrerseits eine Bremsscheibennabe 4a, die mit den axialen Vertiefungen 3f des Radnabenhalses 3e korrespondierenden, axial verlaufenden Vorsprüngen 4d versehen ist, die in Fig. 6 dargestellt sind. Weiterhin umfaßt die Bremsscheibe 4 einen Reibring 4b, der beim Ausführungsbeispiel mit einem Kühlkanal 4c versehen ist. Um eine lösbare Festlegung der über die Vertiefungen 3f und Vorsprünge 4d drehfest auf der Radnabe 3 angeordneten Bremsscheibe 4 zu erzielen, ist ein Haltering 8 vorgesehen, der z. B. mittels Schrauben 8a an die Stirnfläche des Radnabenhalses 3e anschraubbar ist (siehe Fig. 1). Der Haltering 8 kann zugleich als Polrad für ein ABS-Bremssystem ausgebildet sein.

Am Achskörper 1 ist ein Befestigungsflansch 5 für einen Bremssattelträger 6 angeordnet, der mit einem Schacht zur Aufnahme zweier Bremsklötze 7 ausgebildet ist. Jeder Bremsklotz 7 besteht aus einem Bremsbelagträger 7a und dem eigentlichen Bremsbelag 7b.

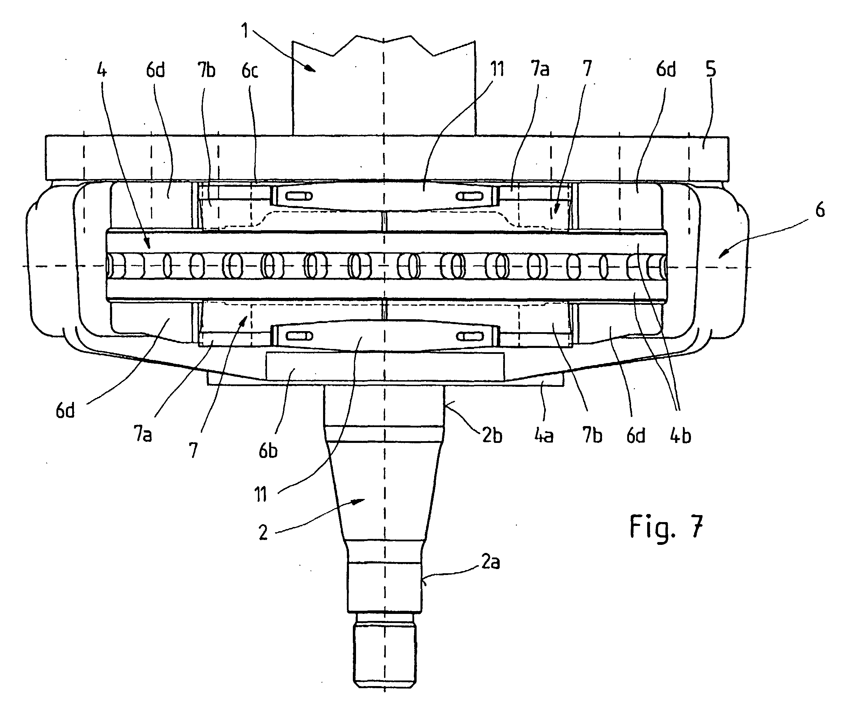

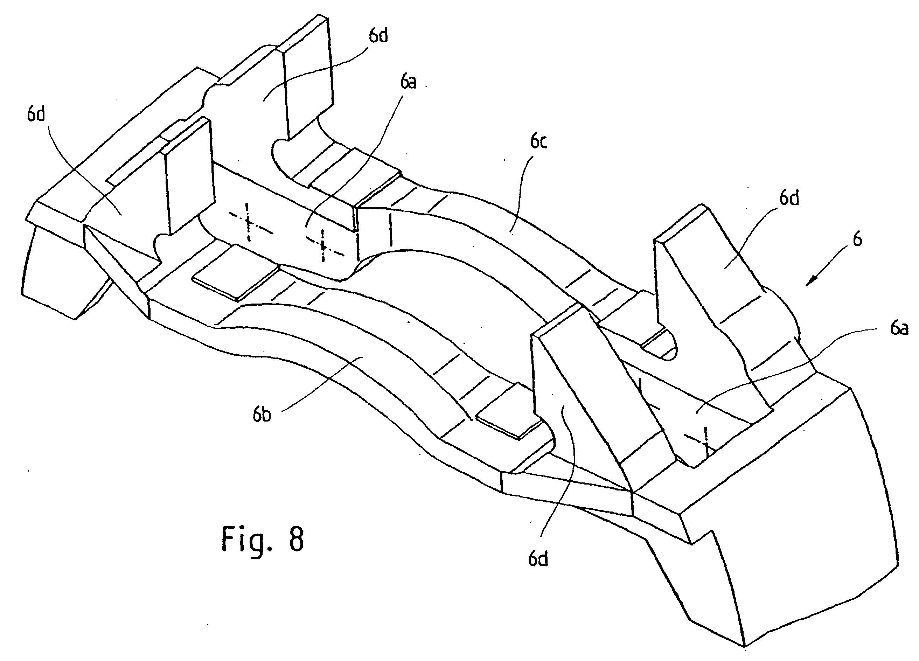

Der Bremssattelträger 6 ist in Fig. 8 perspektivisch dargestellt. Diese Darstellung läßt erkennen, daß der Bremssattelträger zwei Flansche 6a umfaßt, über die er an den Befestigungsflansch 5 anschraubbar ist, der seinerseits an den Achskörper 1 angeschweißt ist. Beim Ausführungsbeispiel erfolgt das Anschrauben des Bremssattelträgers 6 am Befestigungsflansch 5 auf jeder Seite mittels jeweils dreier Schrauben, die in den Fig. 7 und 8 angedeutet sind. Der Bremssattelträger 6 umfaßt weiterhin einen vorderen Verbindungssteg 6b sowie einen hinteren Verbindungssteg 6c, die sich zwischen den beiden Flanschen 6a erstrecken und zwischen sich einen Freiraum für den Reibring 4b der Bremsscheibe 4 aufweisen. Die Oberseite der Verbindungsstege 6b und 6c dient als Auflagefläche für die Bremsklötze 7, die in tangentialer Richtung des Bremssattelträgers 6 durch paarweise radial nach außen hervorstehende Anschläge 6d geführt werden.

Mit strichpunktierten Linien ist in den Fig. 1 bis 5 der Vollständigkeit wegen ein im Längsschnitt dargestellter Bremssattel 9 eingezeichnet, der als in axialer Richtung schwimmend gelagerter Rahmen ausgeführt ist und demzufolge relativ beweglich am Bremssattelträger 6 gelagert ist. Die mit Hilfe des Bremssattels 9 auf die beiden Bremsklötze 7 auszuübende Bremskraft wird durch den Kolben eines ebenfalls strichpunktiert eingezeichneten Bremszylinders 10 erzeugt. Die Bremskraft des Bremszylinderkolbens wird einerseits unmittelbar auf den innenliegenden Bremsklotz 7 und andererseits mittelbar über den Bremssattel 9 auf den außenliegenden Bremsklotz 7 ausgeübt. Um die Bremsklötze 7 sicher innerhalb ihres im Bremssattelträger 6 ausgebildeten Schachtes zu halten, ist für jeden Bremsklotz 7 eine Haltefeder 11 vorgesehen, die gemäß Fig. 6 auf den jeweiligen Bremsbelagträger 7a des Bremsklotzes 7 aufgesetzt ist. Beide Haltefedern 11 werden gemeinsam durch einen am Bremssattel 9 vorgesehenen Haltebügel 12 in ihrer Wirkstellung belastet und fixiert. Diese Situation ist am besten in Fig. 1 zu erkennen.

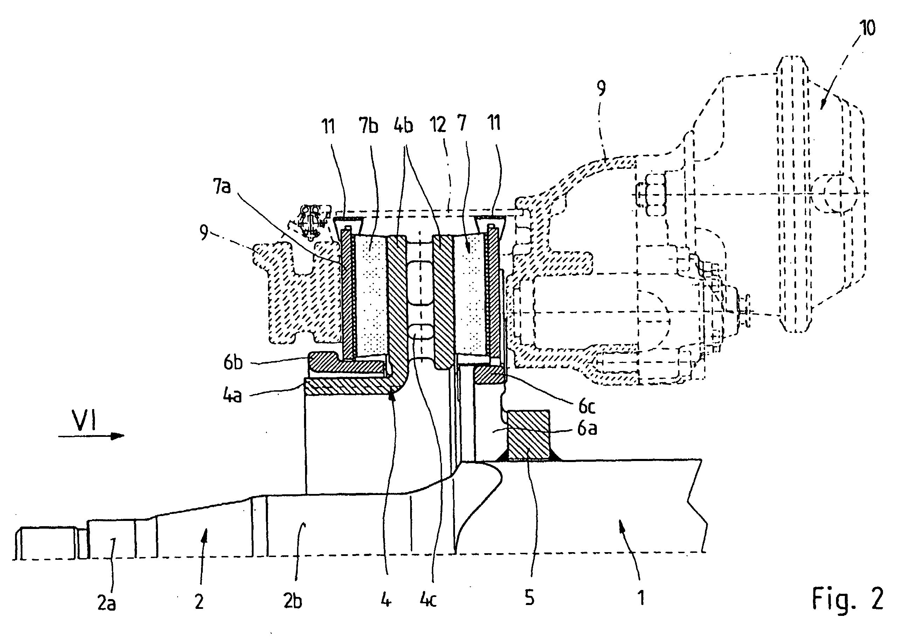

In den Fig. 1 bis 5 sind fünf Verfahrensschritte zum Wechsel der Bremsscheibe 4 dargestellt, wobei Fig. 1 den Betriebszustand der Scheibenbremse zeigt. Um die Bremsscheibe 4 ohne Demontage des Bremssattelträgers 6 auszuwechseln, wird gemäß Fig. 2 als erstes die komplette Radnabe 3 vom Achsschenkel 2 abgezogen. Hierzu ist es als erstes erforderlich, den Haltering 8 durch Herausdrehen der Schrauben 8a vom Radnabenhals 3e zu lösen. Anschließend kann die komplette Radnabe 3 zusammen mit den nicht dargestellten Wälzlagern und Dichtungen sowie dem ebenfalls nicht dargestellten Rad mittels der Achsmutter vom Achsschenkel 2 abgezogen werden, wobei die beim Ausführungsbeispiel am Radnabenhals 3e ausgebildeten Vertiefungen 3f axial aus den an der Bremsscheibennabe 4a ausgebildeten Vorsprüngen 4d herausgleiten. Hierbei wird die Bremsscheibe 4 in geeigneter Weise in ihrer in Fig. 1 gezeigten Stellung festgehalten. Nach dem Abziehen der Nabe 3 ergibt sich der in Fig. 2 gezeichnete Zustand.

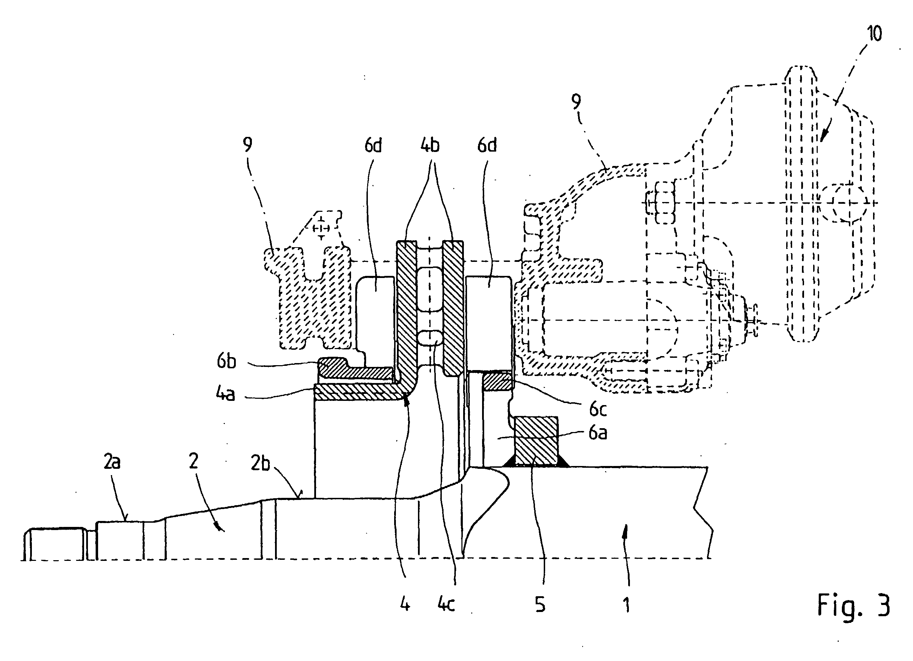

Nach Verschwenken des Haltebügels 12 werden nunmehr die Bremsklötze 7 aus dem durch die Anschläge 6d und den jeweiligen Verbindungssteg 6b bzw. 6c gebildeten Schacht des Bremssattelträgers 6 nach oben herausgenommen. Es ergibt sich die in Fig. 3 gezeichnete Situation.

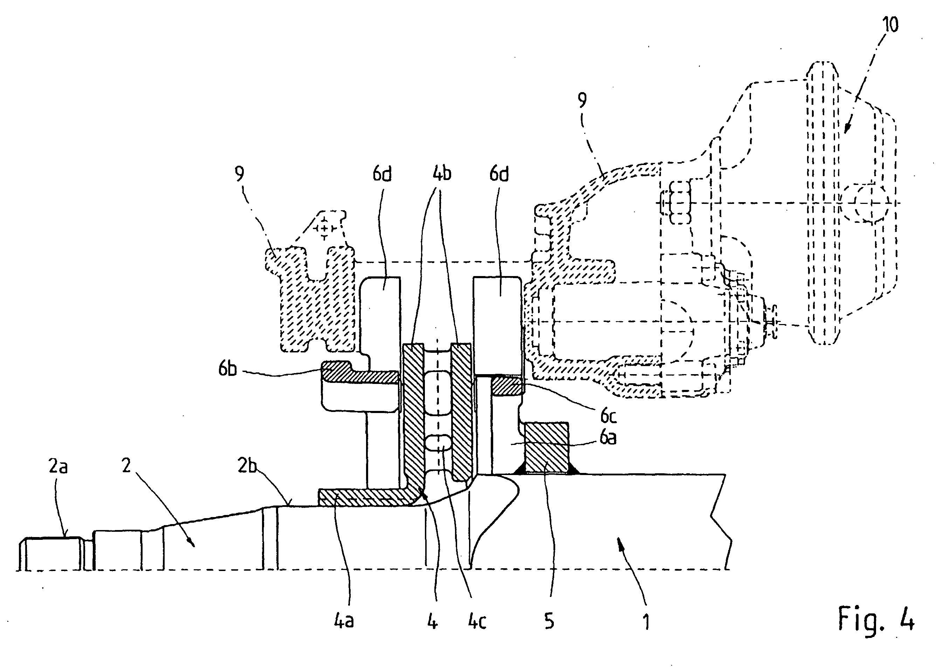

Nunmehr wird gemäß Fig. 4 die Positionierung der Bremsscheibe 4 aufgehoben und die Bremsscheibe 4 in Richtung auf den Achsschenkel 2 abgesenkt. Hierbei gelangt die Bremsscheibe 4 mit dem oberen Teil ihres Reibringes 4b zwischen die beiden Verbindungsstege 6b und 6c des Bremssattelträgers, wogegen die Bremsscheibennabe 4a auf dem Lagersitz 2b des Achsschenkels 2 zur Anlage kommt, wie deutlich aus Fig. 4 hervorgeht.

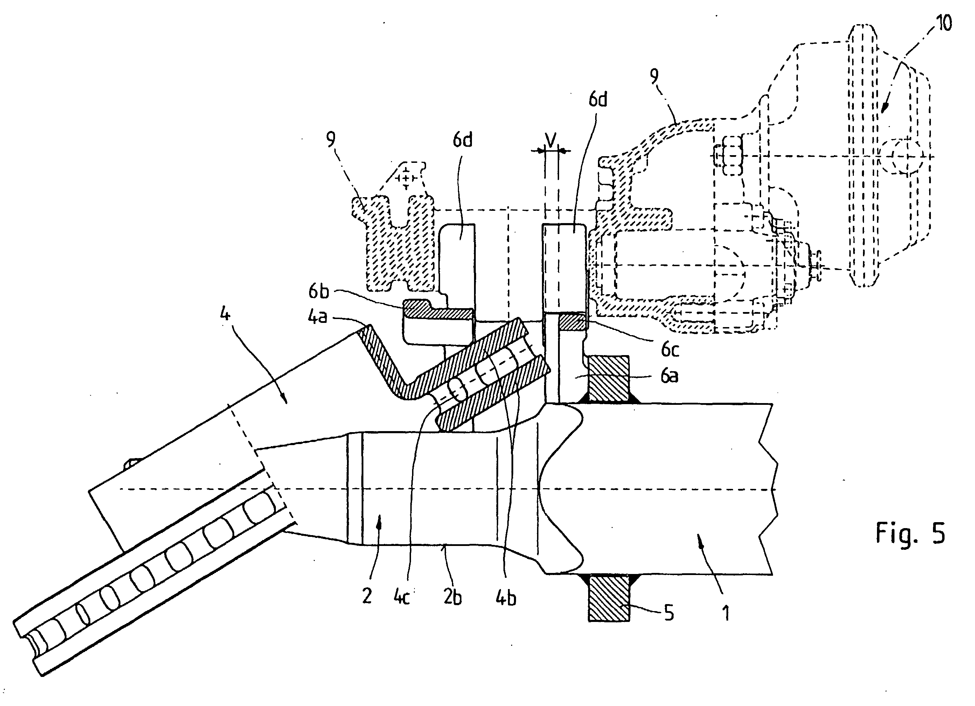

Da die Abmessungen einerseits der Höhe und der axialen Dicke des Reibringes 4b der Bremsscheibe 4 und andererseits des radialen Abstandes zwischen dem Achsschenkel 2 und dem dem Radflansch 3c benachbarten vorderen Teil des Bremssattelträgers 6 sowie des axialen Abstandes zwischen vorderem und hinterem Teil des Bremssattelträgers 6 aufeinander abgestimmt sind, kann nunmehr die Bremsscheibe 4 gemäß Fig. 5 mit ihrer dem Bremssattelträger 6 gegenüberliegenden unteren Hälfte in Richtung auf das freie Ende des Achsschenkels 2 verschwenkt und schließlich aus dem Bremssattelträger 6 entnommen und über den Achsschenkel 2 entfernt werden.

Der Einbau einer neuen Bremsscheibe 4 erfolgt in umgekehrter Reihenfolge der voranstehend erläuterten Verfahrensschritte.

Um das Entfernen einer Bremsscheibe 4 aus dem Bremssattelträger 6 bzw. das Einführen einer neuen Bremsscheibe 4 in den Bremssattelträger 6 zu erleichtern, ist der hintere Verbindungssteg 6c in seinem mittleren Bereich in axialer, von der Bremsscheibe 4 wegweisender Richtung versetzt. Dieser Versatz V ist in Fig. 5 eingezeichnet. Der Versatz V des hinteren Verbindungssteges 6c kann entweder durch eine bogenförmige Ausbildung und/oder durch einen Rücksprung erfolgen. Schließlich zeigt das dargestellte Ausführungsbeispiel, daß der vordere Verbindungssteg 6b schmäler, aber höher als der hintere Verbindungssteg 6c ausgebildet sein kann, wodurch sich das Entfernen bzw. Einführen der Bremsscheibe 4 in den Bremssattelträger 6 weiterhin erleichtert. Zu diesem Zweck ist der radiale Abstand des vorderen Verbindungssteges 6b des Bremssattelträgers 6 vom Achsschenkel 2 größer als der des hinteren Verbindungssteges 6c ausgeführt. Diese Merkmale sind insbesondere in der perspektivischen Darstellung gemäß Fig. 8 zu erkennen.

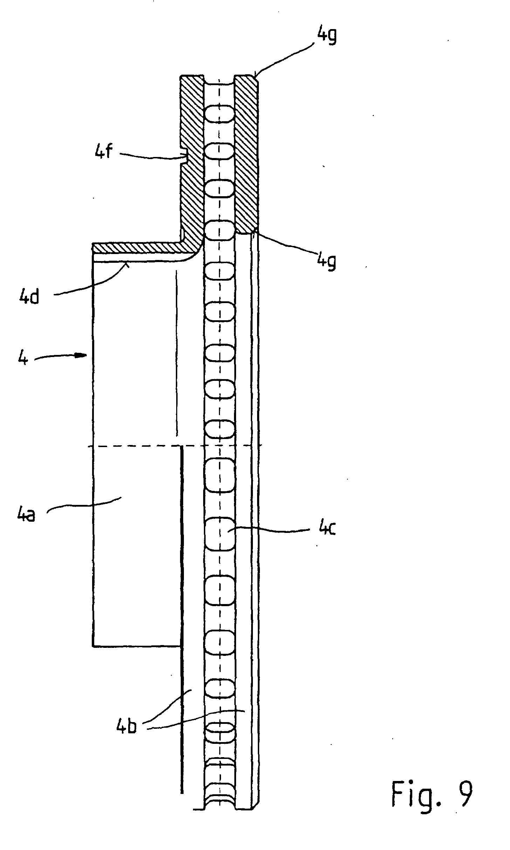

Die Fig. 9 zeigt weitere Gestaltungsmöglichkeiten für eine Vereinfachung des Bremsscheibenwechsels. Hiernach ist der Reibring 4b der Bremsscheibe 4 zumindest in einem, vorzugsweise jedoch in mehreren Teilbereichen an mindestens einer Reibfläche mit Ausnehmungen 4f bzw. Abschrägungen 4g versehen. Das in Fig. 9 dargestellte Ausführungsbeispiel zeigt, daß die obere und untere Kante des innenliegenden Reibringes 4b mit Abschrägungen 4g ausgeführt ist und daß im mittleren Bereich des vorderen Reibringes 4b eine sekantial verlaufende Ausnehmung 4f vorgesehen ist. Bei einem Vergleich der abgewandelten Ausführungsform der Bremsscheibe 4 nach Fig. 9 mit der in Fig. 5 gezeichneten Situation ist zu erkennen, daß sich durch diese Abschrägungen 4g und Ausnehmung 4f das Entnehmen der Bremsscheibe 4 aus dem Bremssattelträger 6 erleichtert.

### Bezugszeichenliste

- 1: Achskörper
- 2: Achsschenkel
- 2a: Lagersitz
- 2b: Lagersitz
- 3: Radnabe
- 3a: Lagersitz
- 3b: Lagersitz
- 3c: Radflansch
- 3d: Bohrung
- 3e: Radnabenhals
- 3f: Vertiefung
- 4: Bremsscheibe
- 4a: Bremsscheibennabe
- 4b: Reibring
- 4c: Kühlkanal
- 4d: Vorsprung
- 4f: Ausnehmung
- 4g: Abschrägung
- 5: Befestigungsflansch
- 6: Bremssattelträger
- 6a: Flansch
- 6b: Verbindungssteg, vorderer
- 6c: Verbindungssteg, hinterer
- 6d: Anschlag
- 7: Bremsklotz
- 7a: Bremsbelagträger
- 7b: Bremsbelag
- 8: Haltering
- 8a: Schraube
- 9: Bremssattel
- 10: Bremszylinder
- 11: Haltefeder
- 12: Haltebügel

- V: Versatz

## Patentansprüche

1. Verfahren zum Wechsel der Bremsscheibe (4) einer Scheibenbremse, insbesondere von Nutzfahrzeugen, deren Bremsscheibe (4) aus einem Reibring (4b) und einer Bremsscheibennabe (4a) besteht, über die die Bremsscheibe (4) an einer auf einem Achsschenkel (2) drehbar gelagerten Radnabe (3) befestigt ist, die einen Radflansch (3c) zur lösbaren Befestigung eines Rades aufweist, wobei die Bremsscheibe (4) im Bereich ihres Reibringes (4b) mit zwei Bremsbelägen (7b) zusammenwirkt, die mit ihren Bremsbelagträgern (7a) in einem Schacht eines Bremssattelträgers (6) angeordnet sind, der an einem Befestigungsflansch (5) eines Achskörpers (1) befestigt ist und die Betätigungseinrichtung der Scheibenbremse trägt,
**dadurch gekennzeichnet,**
**daß** die Radnabe (3) unter Trennung von der Bremsscheibennabe (4a) der in ihrer Position festgehaltenen Bremsscheibe (4) vom Achsschenkel (2) abgezogen wird,
**daß** danach die Bremsbelagträger (7a) mit den Bremsbelägen (7b) aus dem Schacht des Bremssattelträgers (6) entfernt werden
und **daß** anschließend die Positionierung der Bremsscheibe (4) aufgehoben, die Bremsscheibe (4) in Richtung auf den Achsschenkel (2) abgesenkt und die dem Bremssattelträger (6) gegenüberliegende Hälfte der Bremsscheibe (4) in Richtung auf das freie Ende des Achsschenkels (2) verschwenkt und schließlich die Bremsscheibe (4) aus dem Bremssattelträger (6) entnommen und über den Achsschenkel (2) entfernt wird.

2. Verfahren nach Anspruch 1, **dadurch gekennzeichnet, daß** die Radnabe (3) zusammen mit dem am Radflansch (3c) montierten Rad vom Achsschenkel (2) abgezogen wird.

3. Achsmodul mit einer Scheibenbremse, insbesondere von Nutzfahrzeugen, deren Bremsscheibe (4) aus einem Reibring (4b) und einer Bremsscheibennabe (4a) besteht, über die die Bremsscheibe (4) an einer auf einem Achsschenkel (2) drehbar gelagerten Radnabe (3) befestigt ist, die einen Radflansch (3c) zur lösbaren Befestigung eines Rades aufweist, wobei die Bremsscheibe (4) im Bereich ihres Reibringes (4b) mit zwei Bremsbelägen (7b) zusammenwirkt, die mit ihren Bremsbelagträgem (7a) in einem Schacht eines Bremssattelträgers (6) angeordnet sind, der an einem Befestigungsflansch (5) eines Achskörpers (1) befestigt ist und die Betätigungseinrichtung der Scheibenbremse trägt, zur Durchführung des Verfahrens nach Anspruch 1 oder 2, **dadurch gekennzeichnet, daß** die Abmessungen einerseits der Höhe und der axialen Dicke des Reibringes (4b) der Bremsscheibe (4) und andererseits des radialen Abstandes zwischen dem Achsschenkel (2) und dem dem Radflansch (3c) benachbarten vorderen Teil des Bremssattelträgers (6) sowie des axialen Abstandes zwischen vorderem und hinterem Teil des Bremssattelträgers (6) aufeinander abgestimmt sind.

4. Achsmodul nach Anspruch 3 mit einem Bremssattelträger (6), der zwei Flansche (6a) zur Befestigung am Befestigungsflansch (5) des Achskörpers (1) und einen vorderen sowie einen hinteren Verbindungssteg (6b, 6c) zwischen diesen Flanschen (6a) aufweist, die den Schacht für die Bremsbelagträger (7a) bilden, **dadurch gekennzeichnet, daß** der hintere Verbindungssteg (6c) in seinem mittleren Bereich in axialer, von der Bremsscheibe (4) weg weisender Richtung versetzt ausgebildet ist.

5. Achsmodul nach Anspruch 4, **dadurch gekennzeichnet, daß** der Versatz (V) des hinteren Verbindungssteges (6c) durch eine bogenförmige Ausbildung erfolgt.

6. Achsmodul nach Anspruch 4, **dadurch gekennzeichnet, daß** der Versatz (V) des hinteren Verbindungssteges (6c) durch einen Rücksprung erfolgt.

7. Achsmodul nach einem der Ansprüche 3 bis 6, **dadurch gekennzeichnet, daß** der vordere Verbindungssteg (6b) schmaler, aber höher als der hintere Verbindungssteg (6c) ausgebildet ist.

8. Achsmodul nach mindestens einem der Ansprüche 3 bis 7, **dadurch gekennzeichnet, daß** der radiale Abstand des vorderen Verbindungssteges (6b) des Bremssattelträgers (6) vom Achsschenkel (2) größer als der des hinteren Verbindungssteges (6c) ist.

9. Achsmodul nach mindestens einem der Ansprüche 3 bis 8, **dadurch gekennzeichnet, daß** der Reibring (4b) der Bremsscheibe (4) zumindest in einem Teilbereich seines Umfanges an mindestens einer Reibfläche mit Ausnehmungen (4f) bzw. Abschrägungen (4g) versehen ist.

10. Achsmodul nach mindestens einem der Ansprüche 3 bis 9, **dadurch gekennzeichnet, daß** die Bremsscheibennabe (4a) über axial verlaufende Vorsprünge (4d) und/oder Vertiefungen (3f) mit dem Radnabenhals (3e) verdrehfest verbunden ist.

11. Achsmodul nach Anspruch 10, **dadurch gekennzeichnet, daß** die Bremsscheibennabe (4a) in Richtung auf den Radflansch (3c) der Radnabe (3) mit einer axialen Verlängerung versehen ist.

## Claims

1. Method for changing the brake disc (4) of a disc brake, in particular of commercial vehicles, the brake disc (4) of which comprises a friction ring (4b) and a brake-disc hub (4a) via which the brake disc (4) is fastened to a wheel hub (3) which is mounted rotatably on a stub axle (2) and has a wheel flange (3c) for the releasable fastening of a wheel, the brake disc (4) interacting in the region of its friction ring (4b) with two brake pads (7b) which are arranged together with their brake-pad supports (7a) in a shaft of a brake-caliper support (6) which is fastened to a fastening flange (5) of an axle body (1) and bears the actuating device of the disc brake,
**characterized in that** the wheel hub (3) is pulled off from the stub axle (2) with the brake-disc hub (4a) of the brake disc (4), which is secured in its position, being removed, **in that** the brake-pad supports (7a) are then removed together with the brake pads (7b) from the shaft of the brake-caliper support (6), and **in that** subsequently the positioning of the brake disc (4) is cancelled, the brake disc (4) is lowered in the direction of the stub axle (2) and that half of the brake disc (4) which lies opposite the brake-caliper support (6) is pivoted in the direction of the free end of the stub axle (2), and finally the brake disc (4) is taken out of the brake-caliper support (6) and removed over the stub axle (2).

2. Method according to Claim 1, **characterized in that** the wheel hub (3) is pulled off from the stub axle (2) together with the wheel fitted on the wheel flange (3c).

3. Axle module having a disc brake, in particular of commercial vehicles, the brake disc (4) of which comprises a friction ring (4b) and a brake-disc hub (4a) via which the brake disc (4) is fastened to a wheel hub (3) which is mounted rotatably on a stub axle (2) and has a wheel flange (3c) for the releasable fastening of a wheel, the brake disc (4) interacting in the region of its friction ring (4b) with two brake pads (7b) which are arranged together with their brake-pad supports (7a) in a shaft of a brake-caliper support (6) which is fastened to a fastening flange (5) of an axle body (1) and bears the actuating device of the disc brake, for carrying out the method according to Claim 1 or 2, **characterized in that** the dimensions, on the one hand, of the height and the axial thickness of the friction ring (4b) of the brake disc (4) and, on the other hand, of the radial distance between the stub axle (2) and that front part of the brake-caliper support (6) which is adjacent to the wheel flange (3c), and of the axial distance between the front and rear part of the brake-caliper support (6) are coordinated with one another.

4. Axle module according to Claim 3, having a brake-caliper support (6) which has two flanges (6a) for fastening to the fastening flange (5) of the axle body (4), and a front and a rear connecting web (6b, 6c) between these flanges (6a) which form the shaft for the brake-pad supports (7a), **characterized in that** the rear connecting web (6c) is designed such that it is offset in its central region in an axial direction pointing away from the brake disc (4).

5. Axle module according to Claim 4, **characterized in that** the offset (V) of the rear connecting web (6c) is effected by a curved design.

6. Axle module according to Claim 4, **characterized in that** the offset (V) of the rear connecting web (6c) is effected by a set-back portion.

7. Axle module according to one of Claims 3 to 6, **characterized in that** the front connecting web (6b) is designed such that it is narrower, but higher than the rear connecting web (6c).

8. Axle module according to at least one of Claims 3 to 7, **characterized in that** the radial distance of the front connecting web (6b) of the brake-caliper support (6) from the stub axle (2) is greater than that of the rear connecting web (6c).

9. Axle module according to at least one of Claims 3 to 8, **characterized in that** the friction ring (4b) of the brake disc (4) is provided with recesses (4f) and bevels (4g) at least in one subregion of its circumference on at least one frictional surface.

10. Axle module according to at least one of Claims 3 to 9, **characterized in that** the brake-disc hub (4a) is connected in a rotationally fixed manner to the wheel-hub neck (3e) via axially extending projections (4d) and/or depressions (3f).

11. Axle module according to Claim 10, **characterized in that** the brake-disc hub (4a) is provided with an axial extension in the direction of the wheel flange (3c) of the wheel hub (3).

## Revendications

1. Procédé destiné à l'échange du disque de frein (4) d'un frein à disque, notamment de véhicules utilitaires, dont le disque de frein (4) est constitué d'un anneau de friction (4b) et d'un moyeu (4a) de disque de frein, par l'intermédiaire duquel le disque de frein (4) est fixé sur un moyeu de roue (3) monté en rotation sur une fusée d'essieu (2), lequel comporte un boudin de roue (3c) pour la fixation amovible d'une roue, le disque de frein (4) agissant dans la zone de son anneau de friction (4b) conjointement avec deux garnitures (7b) de frein qui, avec leurs supports (7a) de garnitures de frein, sont disposées dans une cage d'un support (6) d'étrier de frein qui est fixé sur une bride de fixation (5) d'un corps d'essieu (1), et qui porte le dispositif d'actionnement du frein à disque,
**caractérisé en ce que**
le moyeu de roue (3) est retiré de la fusée d'essieu (2) par la dissociation du moyeu (4a) du disque de frein (4) retenu dans sa position,
le support (7a) de garnitures de frein est ensuite retiré avec les garnitures (7b) de frein de la cage du support (6) de l'étrier de frein, et
après cela, le positionnement du disque de frein (4) est supprimé, le disque de frein (4) est abaissé en direction de la fusée d'essieu (2), et la moitié du disque de frein (4) opposée au support (6) de l'étrier de frein est pivotée en direction de l'extrémité libre de la fusée d'essieu (2) et, pour finir, le disque de frein (4) est extrait du support (6) de l'étrier de frein et retiré par l'intermédiaire de la fusée d'essieu (2).

2. Procédé selon la revendication 1, **caractérisé en ce que** le moyeu de roue (3) est retiré de la fusée d'essieu (2) avec la roue montée sur le boudin de roue (3c).

3. Module d'essieu destiné à la mise en oeuvre du procédé selon la revendication 1 ou 2, comportant un disque de frein, notamment de véhicules utilitaires, dont le disque de frein (4) est constitué d'un anneau de friction (4b) et d'un moyeu (4a) de disque de frein, par l'intermédiaire duquel le disque de frein (4) est fixé sur un moyeu de roue (3) monté en rotation sur une fusée d'essieu (2), lequel comporte un boudin de roue (3c) pour la fixation amovible d'une roue, le disque de frein (4) agissant dans la zone de son anneau de friction (4b) conjointement avec deux garnitures (7b) de frein qui, avec leurs supports (7a) de garnitures de frein, sont disposées dans une cage d'un support (6) d'étrier de frein qui est fixé sur une bride de fixation (5) d'un corps d'essieu (1), et qui porte le dispositif d'actionnement du frein à disque, **caractérisé en ce que** les dimensions, d'une part de la hauteur et de l'épaisseur axiale de l'anneau de friction (4b) du disque de frein (4), et d'autre part de l'écartement radial entre la fusée d'essieu (2) et la partie avant du support (6) de l'étrier de frein contiguë au boudin de roue (3c), ainsi que de l'écartement axial entre les parties avant et arrière du support (6) de l'étrier de frein, sont adaptées entre elles.

4. Module d'essieu selon la revendication 3, avec un support (6) d'étrier de frein comportant deux brides (6a) pour la fixation sur la bride de fixation (5) du corps d'essieu (1), et une entretoise de liaison avant ainsi qu'une entretoise de liaison arrière (6b, 6c) entre ces brides (6a), qui forment la cage pour le support (7a) de garnitures de frein, **caractérisé en ce que** la zone centrale de l'entretoise de liaison arrière (6c) est décalée axialement dans une direction opposée au disque de frein (4).

5. Module d'essieu selon la revendication 4, **caractérisé en ce que** le décalage (V) de l'entretoise de liaison arrière (6c) est effectué par une forme cintrée.

6. Module d'essieu selon la revendication 4, **caractérisé en ce que** le décalage (V) de l'entretoise de liaison arrière (6c) est effectué par un retrait.

7. Module d'essieu selon l'une quelconque des revendications 3 à 6, **caractérisé en ce que** l'entretoise de liaison avant (6b) est plus étroite, mais plus haute que l'entretoise de liaison arrière (6c).

8. Module d'essieu selon l'une au moins des revendications 3 à 7, **caractérisé en ce que** l'écartement radial de l'entretoise de liaison avant (6b) du support (6) de l'étrier de frein par rapport à la fusée d'essieu (2) est plus important que celui de l'entretoise de liaison arrière (6c).

9. Module d'essieu selon l'une au moins des revendications 3 à 8, **caractérisé en ce que** l'anneau de friction (4b) du disque de frein (4) est muni d'évidements (4f) ou de chanfreins (4g) sur au moins une surface de friction, au moins dans une zone partielle de sa circonférence.

10. Module d'essieu selon l'une au moins des revendications 3 à 9, **caractérisé en ce que** le moyeu (4a) du disque de frein est relié solidairement à la collerette (3e) du moyeu de roue par l'intermédiaire de parties en saillie (4d) et/ou de renfoncements (3f) s'étendant axialement.

11. Module d'essieu selon la revendication 10, **caractérisé en ce que** le moyeu (4a) du disque de frein est muni d'un prolongement axial en direction du boudin de roue (3c) du moyeu de roue (3).
